# EUROPÄISCHE PATENTSCHRIFT

(11) **EP 2 240 971 B1**
(45) Veröffentlichungstag und Bekanntmachung des Hinweises auf die Patenterteilung: **17.02.2016**
(21) Anmeldenummer: 08858539.3
(22) Anmeldetag: 13.11.2008
(51) Int. Cl.: H01M 10/60, H01M 2/10, H01M 2/20, H01M 2/34, H01M 10/0525, H01M 10/42, H01M 10/625, H01M 10/6557, H01M 10/04, H01M 10/6563, H01M 10/647, H01M 10/6555, H01M 10/6562, H01M 10/613

(54) **BATTERIEPACK**
BATTERY PACK
BATTERIE D'ALIMENTATION

(30) Priorität: 11.12.2007 DE 102007059805
(43) Veröffentlichungstag der Anmeldung: 20.10.2010
(73) Patentinhaber: Li-Tec Battery GmbH, 01917 Kamenz (DE)
(72) Erfinder: HEDRICH, Klaus, 64405 Fischbachtal (DE); AUGUSTIN, Sven, 64380 Rossdorf (DE); PAULMANN, Uwe, 59348 Lüdinghausen (DE); GUTSCH, Andreas, 59348 Lüdinghausen (DE); EICHINGER, Günter, 63674 Altenstadt (DE); FUCHS, Andreas, 04177 Leipzig (DE)
(74) Vertreter: Moore, Derek
(86) Internationale Anmeldenummer: PCT/EP2008/065429
(87) Internationale Veröffentlichungsnummer: WO 2009/074421

(56) Entgegenhaltungen:
- WO-A-2007/102670

## Beschreibung

### Gebiet der Erfindung

Die Erfindung betrifft einen Batteriepack für Elektrofahrzeuge oder Fahrzeuge mit Elektrohybridantrieb.
In jüngster Zeit richtet sich das Interesse auf Fahrzeuge, die durch die Antriebskraft eines Elektromotors angetrieben werden, beispielsweise Hybridfahrzeuge, Brennstoffzellenfahrzeuge, Elektrofahrzeuge usw. Derartige Fahrzeuge sind in der Regel weniger umweltbelastend als ausschließlich mit Verbrennungsmotoren angetriebene Kraftfahrzeuge. Diese Fahrzeuge sind mit einer Batterie, einem Kondensator oder dergleichen zum Speichern von elektrischer Energie ausgerüstet, die einem oder mehreren Elektromotoren zugeführt werden soll.

Unter dem Begriff "Batterie" im Sinne der vorliegenden Anmeldung ist ein elektrischer Energiespeicher zu verstehen, der sowohl wiederaufladbar als auch nicht wiederaufladbar sein kann. Insoweit unterscheidet der Anmeldungstext nicht zwischen den Begriffen "Akkumulator" einerseits und "Batterie" andererseits. Unter dem Begriff "Batterie" im Sinne der Anmeldung kann auch ein Kondensator zu verstehen sein.

Batterien als elektrochemische Spannungsquellen umfassen vielfach eine Reihenschaltung und/oder Parallelschaltung einer Vielzahl von Batteriemodulen, die gegebenenfalls durch eine Reihenschaltung und/oder Parallelschaltung einer Vielzahl von Batteriezellen gebildet werden. Die Batteriezellen umfassen zwei Elektroden, die durch einen Separator getrennt sind und einen in der Regel flüssigen oder gelartigen Elektrolyten.

Beispielsweise moderne Lithium-Ionen oder Lithium-Metall-Batterien bzw. Akkus sind hermetisch gekapselt, da Lithium ein hochreaktives Metall ist und die Komponenten eines Lithium-Ionen-Akkus leicht brennbar sind. Solche Batteriezellen sind empfindlich gegen mechanische Beeinträchtigungen, welche beispielsweise zu inneren Kurzschlüssen führen können. Durch inneren Kurzschluss und in Kontakt mit Luft können sich Lithium-Ionen-Batterien bzw. Lithium-Metall-Batterien entzünden. Wegen ihrer außerordentlich hohen Speicherkapazität bei verhältnismäßig geringem Platzbedarf sind Batteriezellen auf Lithium-Ionen-Basis besonders für die Herstellung von Batterien für Elektrofahrzeuge geeignet. Der Einbau von Batterien in Fahrzeugen stellt allerdings besondere Anforderungen in Hinblick auf den Schutz der Batteriezellen gegen mechanische und thermische Beeinträchtigungen.

Es ist leicht vorstellbar, dass für Elektrofahrzeuge Batterien bereitgestellt werden müssen, die eine verhältnismäßig hohe Speicherkapazität und eine verhältnismäßig große Klemmenspannung aufweisen. Insbesondere für die Automobilindustrie, z. B. für Vollelektrofahrzeuge, müssen die Batteriezellen entsprechend groß sein und besitzen aufgrund des hohen spezifischen Gewichts der Elektroden ein hohes absolutes Gewicht. Wie vorstehend bereits erwähnt, sind beispielsweise Batteriezellen auf Lithium-Ionen oder Lithium-Metall-Basis mechanisch empfindlich, so dass bei Einbau in ein Kfz besondere Maßnahmen zu treffen sind, um die Batteriezellen vor mechanischer Beeinträchtigung zu schützen. Bei einem modernen Pkw sind bei normalen Betriebszyklen Beschleunigungskräfte vom Zwei- bis Dreifachen der Erdbeschleunigung in jeder Raumachse zu erwarten. Solche Kräfte wirken auf das Fahrzeug bei Beschleunigung, Verzögerung, Kurvenfahrt und dem Überfahren von Unebenheiten ein. Darüber hinaus ist es unbedingt erforderlich, eine in einem Kraftfahrzeug eingebaute Batterie vor aufprallbedingten mechanischen Einwirkungen und vor aufprallbedingten Beschleunigungskräften zu sichern. Weiter sind die Batterien und damit die Batteriezellen und deren Verbindungen fahrzeugbedingten Vibrationen ausgesetzt.

Schließlich erhitzt sich die Batterie sowohl bei Lade- als auch bei Entladezyklen. Je nach Sonneneinstrahlung können in einer Fahrgastzelle eines Pkw ohne Zutun der thermischen Auswirkungen des Antriebs und einer Batterie Temperaturen von bis zu 60°C vorherrschen, was ebenfalls bei Entwurf einer Fahrzeugbatterie wesentlich zu beachten ist.

### Stand der Technik

Ein großes Batteriepack für eine Hybridlokomotive, welches so konstruiert ist, dass es vorwiegend eine freie konvektive Kühlung der einzelnen Batteriezellen zulässt, ist beispielsweise aus der WO 2007/047 809 A2 bekannt. Dieses Batteriepack besteht in bekannter Art und Weise aus einzelnen Modulen, die in Schubfächern eines Regalsystems angeordnet sind, welches als tragende Konstruktion ausgebildet ist. Die einzelnen Module umfassen jeweils zwei Zellen, die in den Schubfächern mit Abstand zueinander befestigt sind. Die Fächer sind so ausgebildet, dass die einzelnen Module thermisch voneinander getrennt sind, wobei die Zellen mit Abstand so zueinander angeordnet sind, dass wenigstens ein Konvektionskanal gebildet wird, der eine Wärmeabfuhr nach oben ermöglicht. Die gesamte Regalanordnung wird durch horizontale und vertikale Isolatoren als Schockabsorber abgestützt. Diese Schockabsorber ermöglichen eine begrenzte Beweglichkeit der gesamten Anordnung, die mit einer belüfteten bzw. mechanisch ventilierbaren Haube umgeben ist.

Die in der WO 2007/047 809 A2 beschriebene Anordnung, die in der Größenordnung zwischen 15 und 30 t wiegt, mag zwar für den Einsatz auf einem Elektrotriebwagen bzw. einer Elektrolokomotive geeignet sein und in diesem Zusammenhang einen optimalen Schutz für die Batterien bieten, für den Einsatz in einem Pkw ist eine solche Anordnung insbesondere auch aus Platzgründen nicht geeignet.

Einer aus Gründen der konvektiven Wärmeabfuhr freistehend vibrationssichere Anordnung von einzelnen Zellen oder Modulen einer Batterie ist bei dem beengten Bauraum eines Pkws nicht realisierbar.

In der WO 2007/102670 A1 wird ein Batteriemodul beschrieben, welcher einen Batteriezellstapel mit einer Mehrzahl von unmittelbar nebeneinander in einer Reihe angeordneten Batteriemodulen enthält, die miteinander elektrisch verbunden sind und jeweils über Kopplungsteile und Stützelemente stabil auf einem gemeinsamen Rahmen befestigt sind.

### Aufgabe

Gerade moderne Lithium-Ionen oder Lithium-Metall-Batterien zeichnen sich durch eine hohe Energiedichte aus, die diese für den Einsatz im Pkw geeignet erscheinen lassen.

Der Erfindung liegt daher die Aufgabe zugrunde, einen Batteriepack für Elektrofahrzeuge oder Fahrzeuge mit Elektroantrieb bereitzustellen, der einen hinreichenden Schutz vor mechanischer Beeinträchtigung der Batteriezellen aufgrund von Vibrationen und etwa einwirkenden Beschleunigungskräften unter optimaler Raumausnutzung eines gegebenen Einbauraums in einem Pkw ermöglicht. Darüber hinaus soll das Batteriepack gemäß der Erfindung auch so ausgebildet sein, dass eine thermische Überbelastung der Batteriezellen weitestgehend vermieden wird.

### Lösung

Die Aufgabe wird gelöst durch ein Batteriepack für Elektrofahrzeuge oder Fahrzeuge mit Elektrohybridantrieb, umfassend ein Batteriegehäuse sowie innerhalb des Batteriegehäuses angeordnete, in sich geschlossene Batteriezellen, die zu Erzielung einer gewünschten Klemmenspannung elektrisch miteinander verschaltet sind, wobei mehrere Batteriezellen jeweils mit Abstand zueinander in einem Befestigungsrahmen angeordnet sind und jeweils Zellenmodule bilden, wobei die Zellenmodule jeweils auf das Batteriegehäuse durchsetzenden Befestigungselementen angeordnet sind, die als Abstandshalter zwischen den Zellenmodulen ausgebildet sind und die mit dem Batteriegehäuse eine tragende Einheit bilden.

Das Batteriepack gemäß der Erfindung zeichnet sich dabei insbesondere durch eine sehr kompakte und raumsparende Bauweise aus. Insbesondere dadurch, dass die Abstandshalter der Zellenmodule mit dem Batteriegehäuse eine tragende Einheit bilden, wird gewährleistet, dass alle in der Einbausituation im Fahrzeug auftretenden Kräfte von den einzelnen Zellen auf das Batteriegehäuse übertragen werden. Diese Art der Kraftübertragung stellt sicher, dass keine Schwingungen der Zellen auftreten oder Relativbewegungen zwischen den Zellen und dem Batteriegehäuse stattfinden.

Zweckmäßigerweise sind wenigstens einige der Befestigungselemente als Profilstäbe ausgebildet, die zumindest zwei der Umfassungswände des Batteriegehäuses gegeneinander abstützen.

Bei einer bevorzugten Variante des Batteriepacks gemäß der Erfindung ist vorgesehen, dass die Befestigungsrahmen der Zellen module einen Teil der tragenden Einheit bilden, wodurch ein Stabilitätsgewinn ohne zusätzlichen Materialeinsatz erzielt wird. Die einzelnen Befestigungsrahmen halten die in diesen angeordneten Zellen auf Abstand zueinander, so dass die Zellen bei Beschleunigung oder Verzögerung des Fahrzeuges im Wesentlichen frei von Kräften gehalten werden und die auftretenden Kräfte über die Befestigungsrahmen in die Befestigungselemente und von den Befestigungselementen in das Batteriegehäuse eingeleitet werden. Das Batteriegehäuse ist zweckmäßigerweise an einer entsprechenden Aufnahme im Kfz befestigt.

Vorzugsweise sind die Zellen innerhalb eines Befestigungsrahmens wenigstens in Richtung einer Raumachse nachgiebig gelagert. Diese können beispielsweise unter Zwischenlage von Elastomerstreifen, Filzstreifen, Streifen aus thermoplastischem Kunststoff oder dergleichen in dem Befestigungsrahmen aufgehängt sein. Die erfindungsgemäße Konstruktion erlaubt eine begrenzte Bewegbarkeit der einzelnen Zellen, ohne dass die Zellen hierzu Kräfte benachbarter Zellen aufnehmen müssten.

Die Zellen module sind zweckmäßigerweise über elektrische Verbinder miteinander verschaltet. Die Verbinder können beispielsweise aus Leichtmetall bestehen. Bei einer Variante des erfindungsgemäßen Batteriepacks ist vorgesehen, dass die Verbinder aus Aluminium bestehen. So ist eine besonders günstige Wärmeabgabe an die Umgebung gewährleistet.

Bei einer besonders vorteilhaften Ausgestaltung des Batteriepacks gemäß der Erfindung ist vorgesehen, dass die Erfinder als Rechteckplatten mit einem Flächen/Volumen-Verhältnis [m²/m³], 0,3 bis 2,0 ausgebildet sind. Diese Gestaltung hat sich in Hinblick auf die Wärmeabgabe als besonders günstig erwiesen.

Zwecks optimaler Raumausnutzung des Batteriegehäuses können die Zellenmodule reihenweise in mehreren Reihen innerhalb des Batteriegehäuses angeordnet sein.

Dabei ist es aus thermischen Gründen besonders zweckmäßig, wenn die reihenweise Anordnung der Zellenmodule so gewählt ist, dass Zwischenräume zwischen den Zellen jeweils nebeneinander angeordneter Reihen miteinander fluchten bzw. miteinander kommunizieren. Auf diese Art und Weise lässt sich eine günstige Luftdurchströmung des Batteriegehäuses erzielen.

Bei einer Variante des Batteriepacks gemäß der Erfindung ist vorgesehen, dass die Befestigungselemente mehrerer reihenweise übereinander und/oder nebeneinander angeordneter Zellen module zu einer Gitterstruktur miteinander verbunden sind.

Es ist zweckmäßig, wenn das Batteriegehäuse wenigstens eine Be- und eine Entlüftungsöffnung aufweist, die sowohl eine staudruckinduzierte als auch eine konvektive Durchlüftung des Batteriegehäuses zulassen. Zu diesem Zweck kann das Batteriegehäuse beispielsweise mit der Belüftungsöffnung an einen Luftkanal des Kraftfahrzeugs angeschlossen sein. Bei Stillstand des Kraftfahrzeugs entfällt die staudruckinduzierte Luftströmung aufgrund von Fahrdynamik. In diesem Falle kommen eine konvektive Wärmeabgabe oder eine Durchlüftung des Batteriegehäuses mittels eines zusätzlichen Gebläses in Betracht.

Die das Batteriegehäuse durchsetzenden Profilstäbe sind zweckmäßigerweise als T-Profile ausgebildet.

Die Batteriezellen sind zweckmäßigerweise als in Kunststofffolien eingetaschte Elektroden mit dazwischen angeordneten Separatoren und einem flüssigen Elektrolyten ausgebildet, wobei diese jeweils zwei flexible Anschlussfahnen aufweisen, die so an die Verbinder angeschlossen sind, dass durch eine Relativbewegung zwischen den Batteriezellen und den Verbindern keine nennenswerten Kräfte in die Batteriezellen eingeleitet werden.

Die in den Batteriezellen vorgesehenen Separatoren können beispielsweise eine keramische Oberfläche aufweisen und aus einem flächigen, mit einer Vielzahl von Öffnungen versehenen, flexiblen Substrat mit einer auf und in diesem Substrat befindlichen Beschichtung bestehen. Das Material des Substrates kann aus gewebten oder ungewebten, nicht elektrisch leitfähigen Natur- oder Polymerfasern bestehen. Die Beschichtung kann eine poröse, elektrisch isolierende, keramische Beschichtung sein. Die Separatoren können mit einer Elektrolytzusammensetzung gefüllt sein, die ein Leitsalz und eine Basiskomponente aufweist, wobei die Basiskomponente als Hauptbestandteil mit einem Anteil von größer 50 Massen-% zumindest eine ionische Flüssigkeit aufweist, die einen Schmelzpunkt kleiner 100 ° C aufweist.

Die Elektroden und Separatoren können jeweils in einer Tasche aus einem Aluminium-Polymermaterial eingeschweißt sein. Jede Zelle kann beispielsweise eine Kapazität von etwa 40 Amperestunden aufweisen. Die Größe einer solchen Batteriezelle kann beispielsweise etwa 20 x 30 x 10 mm betragen. Eine solche Batteriezelle hat etwa ein Gewicht von 1 kg. Ein Batteriepack gemäß der Erfindung kann zwischen 100 und 200 solcher Zellen aufweisen.

Die Erfindung wird nachstehend anhand eines mit Zeichnungen dargestellten Ausführungsbeispiels erläutert.

### Figurenbeschreibung

Es zeigen:
Figur 1 eine perspektivische Ansicht eines geöffneten Batteriegehäuses mit darin angeordneten Befestigungselementen und darin angeordneten Zellenmodulen,
Figur 2 eine perspektivische Ansicht der reihenweise innerhalb des Batteriegehäuses angeordneten Zellenmodule ohne die Umfassungswände des Batteriegehäuses,
Figuren 3 und 4 perspektivische Ansichten der Zellenmodule des Batteriepacks gemäß der Erfindung,
Figur 5 eine perspektivische Ansicht des Batteriepacks gemäß der Erfindung mit geschlossenem Batteriegehäuse, wobei die Belüftungsöffnungen auf der den Betrachter zugekehrten Seite des Batteriegehäuses angeordnet sind und
Figur 6 eine rückwärtige Ansicht des teilweise geöffneten Batteriegehäuses mit darin reihenweise angeordneten Zellenmodulen.

In den Zeichnungen ist ein Ausführungsbeispiel des Batteriepacks 1 gemäß der Erfindung dargestellt. Das Batteriepack 1 umfasst ein Batteriegehäuse 2 und in dem Batteriegehäuse 2 aufgehängte Batteriezellen 3, welche als elektrochemische Spannungsquelle auf Basis von Lithium ausgebildet sind. Jede Batteriezelle 3 ist als Lithium-Ionen-Batterie bzw. Lithium-Ionen-Akku ausgebildet und umfasst, wie vorstehend bereits erwähnt, zwei durch einen Separator getrennte Elektroden, die zusammen mit einem Elektrolyten in eine Kunststofftasche eingeschweißt sind. Die Batteriezellen 3 sind als hermetisch abgedichtete Batteriezellen 3 mit jeweils zwei Anschlussfahnen ausgebildet.

Jeweils zwei Batteriezellen 3 sind miteinander parallel geschaltet, jeweils 2 parallel geschaltete Batteriezellen 3 sind innerhalb eines Zellenmoduls 4 in Reihe geschaltet.

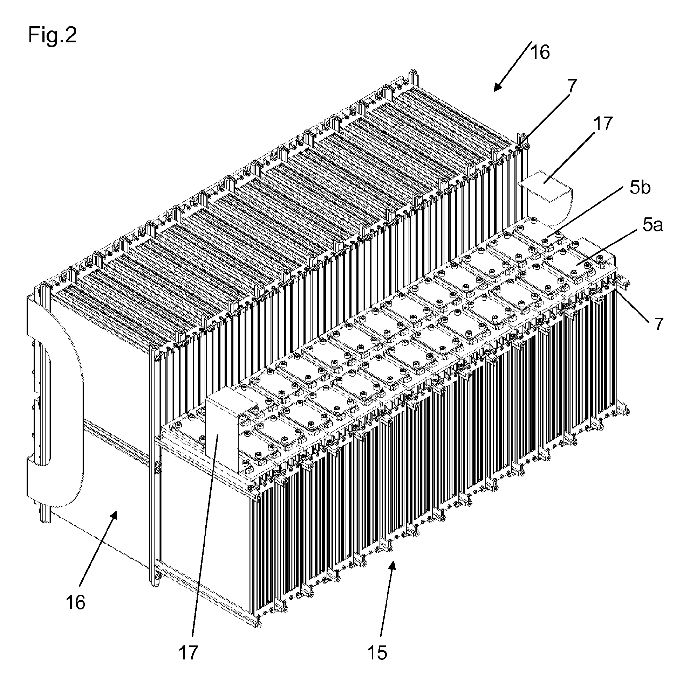

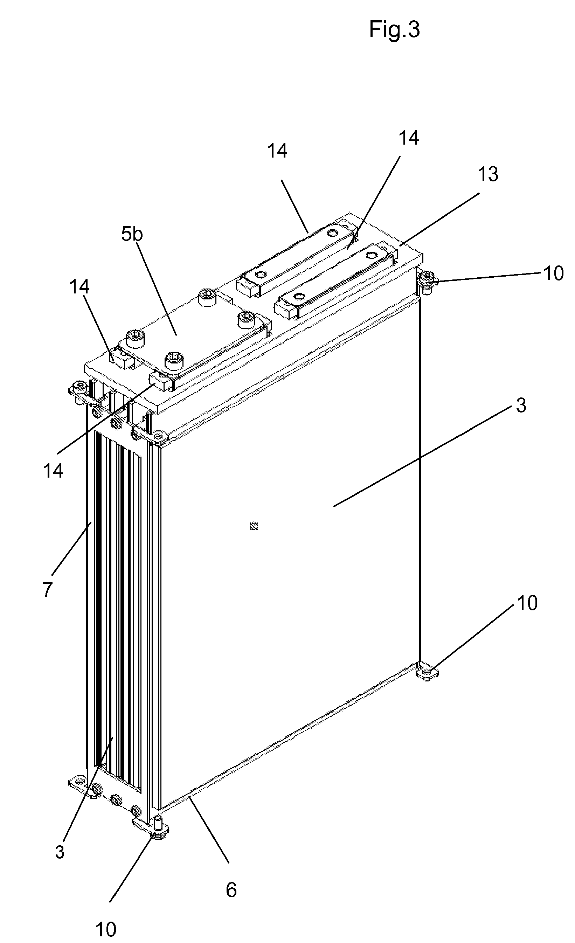

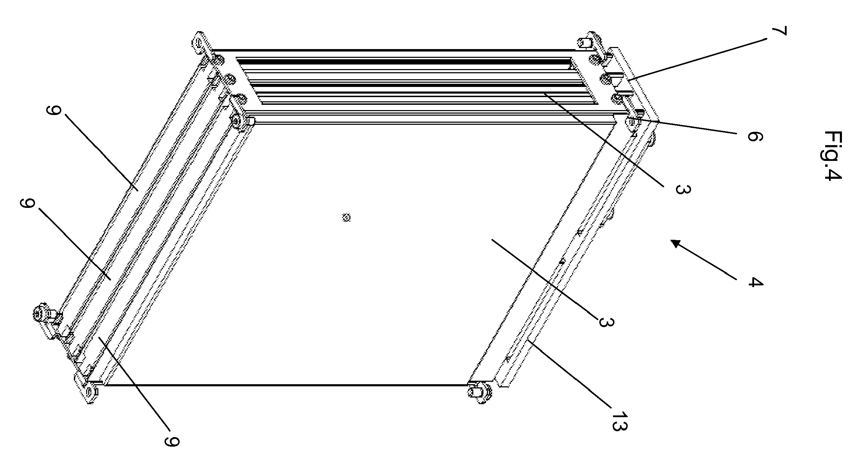

Die Zellenmodule 4 sind beispielsweise in den Figuren 3 und 4 dargestellt. Diese Zellenmodule 4 sind innerhalb des Batteriegehäuses 2, wie dies aus Figur 2 ersichtlich ist, reihenweise angeordnet und elektrisch in Reihe geschaltet. Die Verbindung der Zellenmodule 4 untereinander ist durch Verbinder 5a bewerkstelligt, welche als im Querschnitt rechteckige Aluminiumplatten ausgebildet sind. Über die Verbinder 5b sind jeweils zwei Batteriezellenpaare innerhalb eines Zellenmoduls 4 miteinander in Reihe geschaltet.

In den Figuren 3 und 4 sind die Zellenmodule 4 jeweils in Perspektive dargestellt. Wie vorstehend bereits erwähnt, umfasst jedes Zellenmodul 4 vier Batteriezellen 3, welche in einem Befestigungsrahmen 6 aufgehängt sind. Der Befestigungsrahmen 6 umfasst zwei stirnseitige Blenden 7, die als gestanzte Aluminiumbleche mit einer Belüftungsöffnung 8 ausgebildet sind sowie sich zwischen diesen und zwischen den einzelnen Batteriezellen 3 erstreckende Abstandshalter 9. Die Abstandshalter 9 besitzen ein im Querschnitt T-förmiges Profil und sind als Aluminiumstrangpressprofile ausgebildet. Wie dies den Figuren 3 und 4 zu entnehmen ist, sind die Abstandshalter 9, jeweils sechs an der Zahl, jeweils an ihren Stirnseiten mit den Blenden 7 verschraubt. Die Blenden 7 umfassen jeweils vier mit Bohrungen versehene Befestigungsohren 10, mit welchen diese in der Einbaulage gesichert werden können.

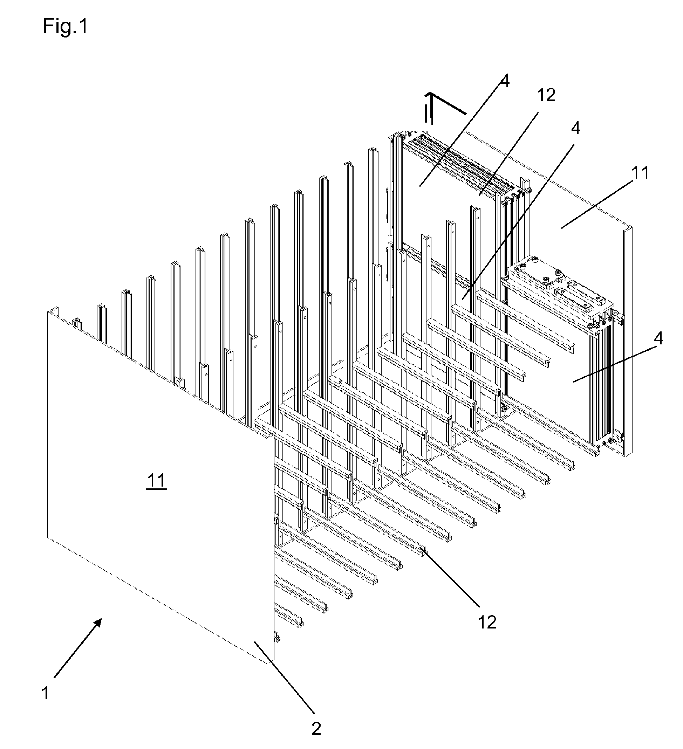

Im Folgenden wird zunächst Bezug genommen auf die Figur 1. In Figur 1 sind Teile des Batteriegehäuses 2 ohne die ebenfalls als tragender Teil des Batteriepacks 1 ausgebildeten Zellenmodule 4 dargestellt. Das Batteriegehäuse 2 wird durch insgesamt sechs Umfassungswände 11 gebildet, von denen in Figur 2 nur zwei stirnseitige Umfassungswände 11 dargestellt sind. Zwischen diesen Umfassungswänden 11 erstrecken sich ebenfalls Abstandshalter 12, die das Batteriegehäuse 2 durchsetzten und die Umfassungswände 11 derart abstützen, dass diese zusammen mit den Zellenmodulen 4 und den Umfassungswänden 11 eine tragende Einheit bilden. Die mit 12 bezeichneten Abstandshalter sind ebenso als Aluminiumstrangpressprofile mit einem T-förmigen Querschnitt ausgebildet. Wie dies ebenfalls in Figur 1 dargestellt ist, sind die Befestigungsohren 10 der Blenden 7 der die Zellenmodule 4 bildenden Befestigungsrahmen 6 mittels Schraubverbindungen auf den Abstandshaltern 12 gesichert.

In den Figuren 1, 2 und 5 ist das Batteriepack 1 gemäß der Erfindung in Einbaulage so abgebildet, dass die Vorderseite dem Betrachter zugewandt ist. Zu Zwecken der Bezugnahme wird die sich aus Figur 1 ergebende Vertikale als Y-Richtung definiert, die Längserstreckung des Batteriegehäuses 2 als X-Richtung sowie die Tiefe des Batteriegehäuses 2 als Z-Richtung. Wie der Zeichnung ohne weiteres zu entnehmen ist, erstrecken sich die als Befestigungselemente wirkenden Abstandshalter 12 innerhalb des Batteriegehäuses 2 nur in Richtung der Y-Achse und der Z-Achse, nicht hingegen in Richtung der X-Achse. Die Stabilität in Richtung der X-Achse wird durch die Zellenmodule 4 und deren Verbindung untereinander selbst erzeugt.

Wie u. a. auch aus der Figur 3 ersichtlich ist, weisen die Zellenmodule 4 eine Anschlussplatte 13 auf, die die Verbinder 5a, 5b aufnimmt. Die Anschlussplatte 13 ist starr mit den Blenden 7 verbunden. Über den in Figur 3 dargestellten Verbinder 5a sind jeweils 2 Batteriezellen 3 eines Zellenmodules 4 miteinander in Reihe geschaltet. Der Verbinder 5a ist mit Sockeln 14 der Anschlussplatte 13 verschraubt. Jede Anschlussplatte 13 umfasst vier solcher Sockel. Die in Figur 3 freien Sockel dienen zur Aufnahme der Verbinder 5b mittels derer die Zellenmodule untereinander reihenweise, d. h. zu einem in sich tragenden Riegel verbunden werden. Die Anordnung der Zellenmodule 4 zueinander kann insbesondere der Figur 2 entnommen werden.

Die Zellenmodule sind jeweils in 3 Reihen, nämlich einer stehenden Reihe 15 und zwei liegenden Reihen 16 zu einer Batterie verschaltet.

Es ist für den Fachmann ersichtlich, dass die Anzahl der Zellenmodule 4 in einer Reihe, die Anzahl der Reihen sowie auch die Anordnung der Reihen 15, 16 zueinander von der Konfektionierung des Batteriepacks 1 abhängig ist.

Mit 17 sind die Anschlussklemmen des Batteriepacks 1 bezeichnet.

Wie eingangs bereits erwähnt, sind die Verbinder 5a, 5b als Aluminiumplatten mit einem rechteckigen Querschnitt ausgebildet, wobei diese außer ihrer tragenden Funktion innerhalb des Batteriepacks 1 auch der Wärmeabfuhr während des Betriebs dienen.

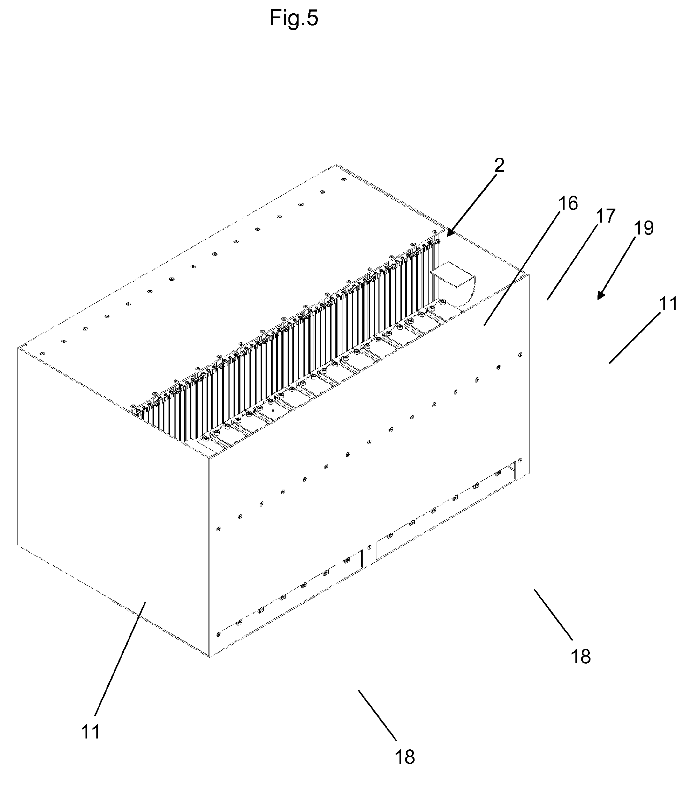

Es wird nun Bezug genommen auf die Figur 5, in der das Batteriepack 1 vollständig mit geschlossenem Batteriegehäuse 2 dargestellt ist, und zwar in einer Ansicht von vorne.

Die vordere Umfassungswand 11 des Batteriegehäuses 2 ist mit zwei Belüftungsöffnungen 18 versehen, welche als Eintrittsöffnungen für eine staudruckinduzierte Luftströmung dienen. Diese Luftströmung kann entweder durch Gebläse oder durch Anströmung aufgrund der Fahrdynamik des Kfz, in welches das Batteriepack 1 eingebaut ist, erzeugt werden. Die Luftströmung tritt in Richtung der Z-Achse in das Batteriegehäuse 2 ein und durchdringt die stehende Reihe 15 an Zellenmodulen 4. Diese Zellenmodule 4 sind so angeordnet, dass die Belüftungsöffnungen 8 der Blenden 7 eines jeden Zellenmoduls 4 der Anströmung zugewandt sind. Die einzelnen Zellen 3 sind, wie das vorstehend bereits erwähnt wurde, innerhalb der Zellenmodule 4 vermittels der Abstandshalter 9 auf Abstand zueinander angeordnet.

Nach dem die Kühlluft durch die stehende Reihe der Zellenmodule 4 hindurch getreten ist, wird die Strömung durch die übereinander liegenden Reihen 16 so zirkuliert, dass innerhalb des Batteriegehäuses 2 eine Strömungswalze entsteht, die aus dem mit 19 bezeichneten Luftauslass wieder austritt. Dieser Luftauslass 19 gewährleistet zudem die Zugänglichkeit der Anschlussklemmen 17.

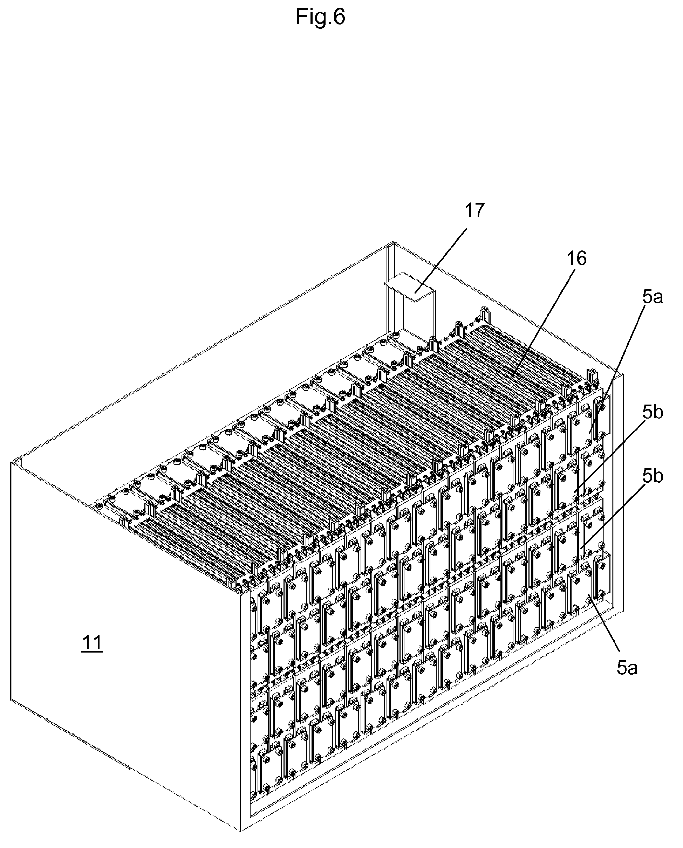

In Figur 6 ist die Rückansicht des Batteriegehäuses 2 bzw. des Batteriepacks 1 dargestellt, wobei die rückwärtige Umfassungswand aus Gründen der Darstellbarkeit weggelassen ist.

Wie insbesondere aus der Figur 5 ersichtlich ist, sind die Umfassungswände 11 mit den als Abstandshalter 12 ausgebildeten Profilstäben verschraubt. So erhält die gesamte Konstruktion eine außerordentlich hohe Stabilität gegen in der Einbausituation etwa auf das Batteriepack 1 einwirkende Beschleunigungskräfte. Wie zuvor erwähnt, werden die in Richtung der X-Achse wirkenden Kräfte von den in dieser Richtung gegeneinander abgestützten Befestigungsrahmen 6 aufgefangen, wobei jede Batteriezelle 3 innerhalb des Befestigungsrahmens in gewissen Grenzen beweglich aufgehängt ist. Dies wird dadurch erreicht, dass zwischen den Abstandshaltern 9 und den Zellen jeweils Filzstreifen angeordnet sind, die die einzelne Batteriezelle 3 im Wesentlichen frei von Kräften halten. Anstelle von Filzstreifen können auch Elastomerstreifen oder dergleichen zwischen den Abstandshaltern 9 und der jeweiligen Batteriezelle 3 angeordnet sein.

Wie eingangs bereits erwähnt, sind die Batteriezellen 3 jeweils als Folientaschen ausgebildet. Die Abstandshalter 9 besitzen ein jeweils im Querschnitt T-förmiges Profil, wobei jeder Abstandshalter 9 einen Winkel bildet, dessen Schenkellänge etwa der halben Dicke der Batteriezellen 3 entspricht. Eine Batteriezelle 3 kann somit, vergleichbar mit einer Fensterscheibe in einem Rahmen, jeweils zwischen zwei oberen und zwei unteren Abstandshaltern 9 unter Zwischenlage eines Filzstreifens oder Folienstreifens oder Elastomerstreifens beweglich gelagert sein.

Die Verbinder 5b stellen sowohl eine elektrische als auch eine mechanische Verbindung zwischen dem einzelnen Befestigungsrahmen 6 her, so dass diese Verbinder 5b ebenfalls einen Teil der tragenden Struktur bilden können.

### Bezugszeichenliste

- 1: Batteriepack
- 2: Batteriegehäuse
- 3: Batteriezellen
- 4: Zellenmodul
- 5a, 5b: Verbinder
- 6: Befestigungsrahmen
- 7: Blenden
- 8: Belüftungsöffnungen
- 9: Abstandshalter
- 10: Befestigungsohren
- 11: Umfassungswände
- 12: Abstandshalter
- 13: Anschlussplatte
- 14: Sockel
- 15: stehende Reihe von Zellenmodulen
- 16: liegende Reihe von Zellenmodulen
- 17: Anschlussklemmen
- 18: Belüftungsöffnungen
- 19: Luftauslass

## Patentansprüche

1. Batteriepack (1) für Elektrofahrzeuge oder Fahrzeuge mit Elektrohybridantrieb, umfassend ein Batteriegehäuse (2) sowie innerhalb des Batteriegehäuses (2) angeordnete, in sich geschlossene Batteriezellen (3), die zur Erzielung einer gewünschten Klemmenspannung elektrisch miteinander verschaltet sind, wobei mehrere Batteriezellen (3) jeweils mit Abstand zueinander in einem Befestigungsrahmen (6) angeordnet sind und jeweils Zellenmodule (4) bilden, wobei die Zellenmodule (4) jeweils auf das Batteriegehäuse (2) durchsetzenden Befestigungselementen angeordnet sind,
**dadurch gekennzeichnet, dass**
die Befestigungselemente als Abstandshalter (12) zwischen den Zellenmodulen (4) ausgebildet sind und mit dem Batteriegehäuse (2) eine tragende Einheit bilden;
wobei die Befestigungselemente mehrerer reihenweise übereinander und/oder nebeneinander angeordneter Zellenmodule (4) zu einer Gitterstruktur miteinander verbunden sind und
wobei die Befestigungselemente oder wenigstens einige der Befestigungselemente als Profilstäbe ausgebildet sind, die zumindest zwei der Umfassungswände (11) des Batteriegehäuses (2) gegeneinander abstützen.

2. Batteriepack nach Anspruch 1, **dadurch gekennzeichnet, dass** die Befestigungsrahmen (6) der Zellenmodule (4) einen Teil der tragenden Einheit bilden.

3. Batteriepack nach einem der Ansprüche 1 oder 2, **dadurch gekennzeichnet, dass** die Batteriezellen (3) innerhalb eines Befestigungsrahmens (6) bezüglich des Befestigungsrahmens (6) wenigstens in Richtung einer Raumachse nachgiebig gelagert sind.

4. Batteriepack nach einem der Ansprüche 1 bis 3, **dadurch gekennzeichnet, dass** die Zellenmodule (4) über elektrische Verbinder (5a, 5b) miteinander verschaltet sind.

5. Batteriepack nach Anspruch 4, **dadurch gekennzeichnet, dass** die Verbinder (5a, 5b) aus Leichtmetall bestehen.

6. Batteriepack nach einem der Ansprüche 4 oder 5, **dadurch gekennzeichnet, dass** die Verbinder (5a, 5b) aus Aluminium bestehen.

7. Batteriepack nach einem der Ansprüche 4 bis 6, **dadurch gekennzeichnet, dass** die Verbinder (5a, 5b) als Rechteckplatten mit einem Flächen/Volumen-Verhältnis [m^{2/}m³] von 0,3 - 2,0 ausgebildet sind.

8. Batteriepack nach einem der Ansprüche 1 bis 7, **dadurch gekennzeichnet, dass** die Zellenmodule (4) reihenweise in mehreren Reihen innerhalb des Batteriegehäuses (2) angeordnet sind.

9. Batteriepack nach Anspruch 8, **dadurch gekennzeichnet, dass** die reihenweise Anordnung der Zellenmodule (4) so gewählt ist, dass die Zwischenräume zwischen den Zellen jeweils nebeneinander angeordneter Reihen miteinander fluchten bzw. miteinander kommunizieren.

10. Batteriepack nach einem der Ansprüche 1 bis 9, **dadurch gekennzeichnet, dass** das Batteriegehäuse (2) wenigstens eine Be- und Entlüftungsöffnung (18, 19) aufweist, die sowohl eine staudruckinduzierte als auch eine konvektive Durchlüftung des Batteriegehäuses (2) zulassen.

11. Batteriepack nach Anspruch 10, **dadurch gekennzeichnet, dass** die Profilstäbe als T-Profile ausgebildet sind.

12. Batteriepack nach einem der Ansprüche 1 bis 11, **dadurch gekennzeichnet, dass** die Batteriezellen (3) jeweils als in Kunststofffolien eingetaschte Elektroden mit dazwischen angeordneten Separatoren mit einem flüssigen Elektrolyten ausgebildet sind und jeweils zwei flexible Anschlussfahnen (3a, 3b) aufweisen, die an die Verbinder (5a, 5b) angeschlossen sind.

13. Batteriepack nach einem der Ansprüche 1 bis 12, **dadurch gekennzeichnet, dass** sich die als Befestigungselemente wirkenden Abstandshalter (12) innerhalb des Batteriegehäuses (2) nur in Richtung der Höhenerstreckung und der Tiefenerstreckung und nicht in Richtung der einer Stapelrichtung der Batteriezellen innerhalb der Module entsprechenden Längserstreckung des Batteriegehäuses erstrecken.

## Claims

1. Battery pack (1) for electric vehicles or vehicles with an electro-hybrid drive, comprising a battery housing (2) and self-contained battery cells (3), which are located within the battery housing (2) and electrically interconnected to obtain a desired terminal voltage, wherein several battery cells (3) are arranged at a distance from one another in a mounting frame (6) and form cell modules (4), each of the cell modules (4) being arranged on fastening elements passing through the battery housing (2),
**characterised in that**
the fastening elements are designed as spacers (12) between the cell modules (4) and form a supporting unit together with the battery housing (2);
wherein the fastening elements of several cell modules (4) arranged in a row on top of and/or adjacent to one another are connected to one another to form a grid structure and
wherein the fastening elements or at least some of the fastening elements are designed as profiled bars which support at least two of the enclosing walls (11) of the battery housing (2) against one another.

2. Battery pack according to claim 1, **characterised in that** the mounting frame (6) of the cell modules (4) forms a part of the supporting unit.

3. Battery pack according to claim 1 or 2, **characterised in that** the battery cells (3) within a mounting frame (6) are mounted for yielding relative to the mounting frame (6) in the direction of at least one spatial axis.

4. Battery pack according to any of claims 1 to 3, **characterised in that** the cell modules (4) are interconnected via electric connectors (5a, 5b).

5. Battery pack according to claim 4, **characterised in that** the connectors (5a, 5b) consist of a light alloy.

6. Battery pack according to claim 4 or 5, **characterised in that** the connectors (5a, 5b) consist of aluminium.

7. Battery pack according to any of claims 4 to 6, **characterised in that** the connectors (5a, 5b) are designed as rectangular plates with an area-to-volume ratio [m²/m³) of 0.3 to 2.0.

8. Battery pack according to any of claims 1 to 7, **characterised in that** the cell modules (4) are arranged in several rows within the battery housing (2).

9. Battery pack according to claim 8, **characterised in that** the arrangement of the cell modules (4) in rows is chosen such that the spaces between the cells of rows which are arranged adjacent to one another are aligned to one another or communicate with one another.

10. Battery pack according to any of claims 1 to 9, **characterised in that** the battery housing (2) has at least one ventilation and vent opening (18, 19), which openings allow both a back pressure-induced and a convective ventilation of the battery housing (2).

11. Battery pack according to claim 10, **characterised in that** the profiled bars are designed as T-sections.

12. Battery pack according to any of claims 1 to 11, **characterised in that** the battery cells (3) are designed as electrodes pocketed in plastic film with separators with a liquid electrolyte placed in between, and **in that** they have two flexible solder tags (3a, 3b), which are connected to the connectors (5a, 5b).

13. Battery pack according to any of claims 1 to 12, **characterised in that** the spacers (12) acting as fastening elements extend within the battery housing (2) only in the direction of the height and depth dimension and not in the direction of the longitudinal dimension of the battery housing, which corresponds to a stacking direction of the battery cells within the modules.

## Revendications

1. Bloc-batterie (1) pour des véhicules automobiles électriques ou des véhicules automobiles dotés d'un moteur électro-hybride, comprenant un boîtier (2) de batterie ainsi que des cellules (3) de batterie renfermées à l'intérieur du boîtier (2) de batterie qui sont couplées électriquement les unes aux autres pour obtenir une tension souhaitée aux bornes, plusieurs cellules (3) de batterie étant respectivement disposées à une certaine distance les unes des autres dans un cadre (6) de fixation et formant respectivement des modules (4) de cellules, les modules (4) de cellules étant respectivement disposés sur le boîtier (2) de batterie d'éléments de fixation rivetés, **caractérisé en ce que** les éléments de fixation sont conçus comme des étriers (12) entre les modules (4) de cellule et forment une unité de support conjointement avec le boîtier (2) de batterie ; les éléments de fixation de plusieurs modules (4) de cellules disposés adjacents les uns aux autres et/ou en rangées étant reliés ensemble à une structure grillagée, les éléments de fixation ou au moins certains des éléments de fixation étant conçus comme des barres profilées qui supportent au moins deux parois périphériques (11) du boîtier (2) de batterie l'une contre l'autre.

2. Bloc-batterie selon la revendication 1, **caractérisé en ce qu** les cadres (6) de fixation du module (4) de cellules forment une partie de l'unité de support.

3. Bloc-batterie selon l'une quelconque des revendications 1 ou 2, **caractérisé en ce que** les cellules (3) de batterie sont logées élastiquement à l'intérieur d'un cadre (6) de batterie au moins dans le sens de l'axe spatial par rapport au cadre (6) de batterie.

4. Bloc-batterie selon l'une quelconque des revendications 1 à 3, **caractérisé en ce que** les module (4) de cellules sont couplés les uns aux autres au moyen de connecteurs électriques (5a, 5b)

5. Bloc-batterie selon la revendication 4, **caractérisé en ce que** les connecteurs (5a, 5b) sont constitués de métal léger,

6. Bloc-batterie selon l'une quelconque des revendications 4 ou 5, **caractérisé en ce que** les connecteurs (5a, 5b) sont constitués d'aluminium.

7. Bloc-batterie selon l'une quelconque des revendications 4 à 6, **caractérisé en ce que** les connecteurs (5a, 5b) sont conçus comme des plaques rectangulaires présentant un rapport surface/volume [m²/m³] compris entre 0,3 et 2,0.

8. Bloc-batterie selon l'une quelconque des revendications 1 à 7, **caractérisé en ce que** les modules (4) de cellules sont disposés en plusieurs rangées à l'intérieur du boîtier (2) de batterie.

9. Bloc-batterie selon la revendication 8, **caractérisé en ce qu'**on choisit l'agencement en rangées des modules (4) de cellules de telle sorte que les espaces intermédiaires entre les cellules des rangées adjacentes respectives communiquent ou s'alignent entre eux.

10. Bloc-batterie selon l'une quelconque des revendications 1 à 9, **caractérisé en ce que** le boîtier (2) de batterie présente au moins une ouverture d'aération et de ventilation (18, 19) qui permettent une aération tant par convection qu'induite par la pression dynamique du boîtier (2) de batterie.

11. Bloc-batterie selon la revendication 10, **caractérisé en ce que** les barres profilées sont conçues comme des profilés en T.

12. Bloc-batterie selon l'une quelconque des revendications 1 à 11, **caractérisé en ce que** les cellules (3) de batterie sont respectivement conçues comme des électrodes enveloppées dans des feuilles de matière synthétique, des séparateurs disposés entre elles présentant un électrolyte liquide et présentant respectivement deux barrettes souples (3a, 3b) qui sont raccordées aux connecteurs (5a, 5b).

13. Bloc-batterie selon l'une quelconque des revendications 1 à 12, **caractérisé en ce que** les étriers (12) agissant comme des éléments de fixation à l'intérieur du boîtier (2) de batterie s'étendent uniquement dans le sens de la hauteur et dans le sens de la profondeur et non dans le sens longitudinal du boîtier de batterie correspondant au sens d'empilement des cellules de batterie à l'intérieur du module.
